# EUROPEAN PATENT SPECIFICATION

(11) **EP 2 405 705 B1**
(45) Date of publication and mention of the grant of the patent: **18.06.2014**
(21) Application number: 10748327.3
(22) Date of filing: 02.03.2010
(51) Int. Cl.: H04L 1/00, H04W 28/06, H04W 80/02

(54) **METHOD, SYSTEM AND APPARATUS FOR INDICATING A UNIT FORMAT**
VERFAHREN, SYSTEM UND VORRICHTUNG ZUR ANZEIGE DES FORMATS EINER EINHEIT
PROCÉDÉ, SYSTÈME ET APPAREIL PERMETTANT D'INDIQUER UN FORMAT D'UNITÉ

(30) Priority: 04.03.2009 CN 200910078850
(43) Date of publication of application: 11.01.2012
(73) Proprietor: China Academy of Telecommunications Technology, Haidian District, Beijing 100191 (CN)
(72) Inventor: ZHAO, Yi, Beijing 100083 (CN); LI, Guoqing, Beijing 100083 (CN); GAO, Zhuo, Beijing 100083 (CN); CHEN, Li, Beijing 100083 (CN); XU, Fangli, Beijing 100083 (CN); WANG, Zhixue, Beijing 100083 (CN)
(74) Representative: Tanty, François
(86) International application number: PCT/CN2010/070827
(87) International publication number: WO 2010/099737

(56) References cited:
- WO-A1-2006/075820
- WO-A1-2008/142032
- WO-A2-01/39525
- WO-A2-02/01774
- CN-A- 1 555 663
- CN-A- 101 151 818
- US-A1- 2008 020 757
- "3rd Generation Partnership Project; Technical Specification Group Radio Access Network; Packet Data Convergence Protocol (PDCP) specification (Release 7)", 3GPP STANDARD; 3GPP TS 25.323, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.4.0, 1 March 2009 (2009-03-01), pages 1-44, XP050367864,
- "3rd Generation Partnership Project; Technical Specification Group Radio Access Network; Radio Access Bearer Support Enhancements (Release 4)", 3GPP STANDARD; 3GPP TR 25.844, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V4.3.0, 1 September 2002 (2002-09-01), pages 1-29, XP050369221,

## Description

### Field of the Invention

The present invention relates to the field of wireless communications and particularly to a method, system and apparatus for indicating a unit format.

### Background of the Invention

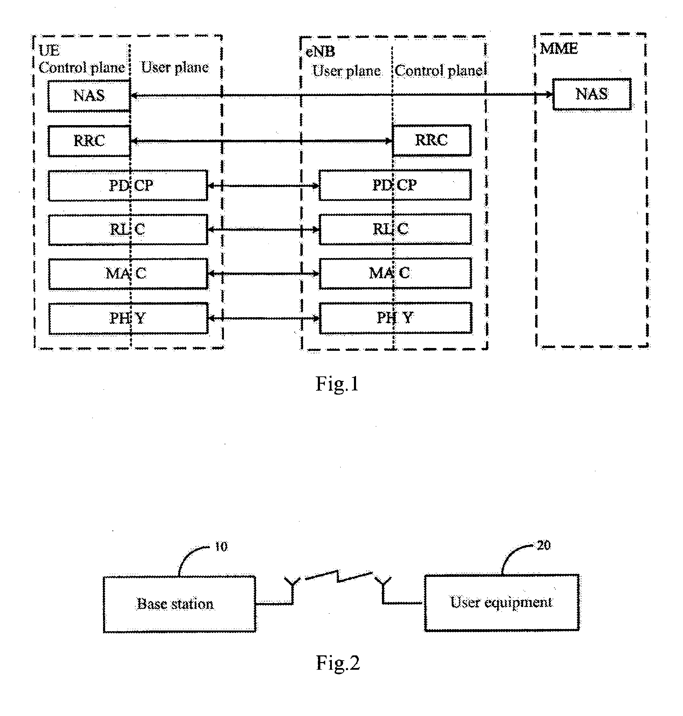

A structure of a protocol stack in an existing Long Term Evolution (LTE) system is illustrated in Fig. 1.

In Fig. 1, the LTE system includes a User Equipment (UE), a base station (eNB) and a Mobility Management Entity (MME).

The structure of the protocol stack in the LTE system includes a Non-Access Stratum (NAS) layer, a Radio Resource Control (RRC) layer, a Packet Data Convergence Protocol (PDCP) layer, a Radio Link Control (RLC) layer, a Media Access Control (MAC) layer and a Physical (PHY) layer.

The protocol stack of the UE and the eNB may be divided vertically into a user plane and a control plane. Signalling is transmitted and processed, that is, the signalling is borne, in the control plane. Data is transmitted and processed, that is, the data is borne, in the user plane.

For transmission of the data, both the signalling and the data are provided at specific locations in a unit and then encapsulated at each of the layers.

At the PDCP layer, for example, an operation of head-compression (or head-decompression) and an operation of encryption (or decryption) are performed on a received data packet (i.e., user data) generally at the PDCP layer of the user plane. Operations of encryption (or decryption) and integrity protection (or integrity verification) are performed on a received data packet (i.e., control signalling) generally at the PDCP layer of the control plane.

In order to perform the functions of head-compression, encryption, integrity protection, etc., a data packet received from a higher layer for transmission (i.e., a unit at the higher-layer) is processed at the PDCP layer and added a PDCP head to form a data packet at the PDCP layer (i.e., a unit at the PDCP layer), which is transmitted to a lower layer.

There is only one unit format in the existing system. Therefore, a transmitter shall perform a transmission operation in this unit format and a receiver shall perform a reception operation on the borne data also in this unit format upon reception of information transmitted from the transmitter.

However, one unit format apparently can not satisfy a current demand with the development of communications. If there are a plurality of unit formats in the system, it may be difficult for the receiver to know a specific unit format in which the transmitter performs a transmission operation, and if the receiver adopts a different unit format from that of the transmitter, the reception may fail.

In summary, it may be difficult for both the transmitter and the receiver to operate in the same unit format in the case of a plurality of unit formats in the existing system, thus decreasing the efficiency of data transmission.

US 2008/020757 A1 discloses a solution for configuring PDCP protocol entities between mobile station and base station, which further discloses: base station receives a communication from mobile station about the settings supported by mobile station of PDCP protocol entity to be configured of mobile station; base station takes into consideration the settings supported by mobile station of PDCP protocol entity to be configured to select possible compression algorithms and compression parameters and sends them via first configuration request to mobile station; first configuration request contains a PDCP protocol entity ID to be used in later procedure.

WO 02/01774 A2 discloses different data streams undergoing different data compression methods before being multiplexed within the PDCP of a UMTS radio-communication system, which further discloses that PDCP PDU formats are differentiated by using values of PID field or PDU type field.The article entitled "3rd Generation Partnership Project; Technical Specificatino Group Radio Access Network; Packet Data Convergence Protocol (PDCP) specification (Release 7)", 3GPP STANDARD; 3GPP TS 25.323, no. V8.4.0, XP050367864 published on 1 March 2009 discloses differentiating various PDCP PDU formats by using parameter of PDU type field of PDCP.

### Summary of the Invention

Embodiments of the invention provide a method, system and apparatus for indicating a unit format so that both a transmitter and a receiver can operate in the same unit format in the case of a plurality of unit formats to thereby improve the efficiency of data transmission.

A method for indicating a unit format according to an embodiment of the invention includes:
selecting, by a base station, one of a plurality of unit formats according to a preset first selection condition, wherein the plurality of unit formats includes a first format and a second format, LTE user equipment only supports the first format and LTE-A user equipment supports both the first format and the second format, and
in case that the preset first selection condition includes types of unit formats supported by a user equipment,
when the user equipment is an LTE user equipment, the base station selects the first format; and
when the user equipment is an LTE-A user equipment, the base station selects one of the first format and the second format;
in case that the preset first selection condition further includes one or more of a transmission rate required for a bearer established between the user equipment and the base station, a channel condition between the user equipment and the base station and a current cell load condition,
when the user equipment is an LTE user equipment, the base station selects the first format; and
when the user equipment is an LTE-A user equipment,
it is checked whether the transmission rate required for a bearer established between the user equipment and the base station is larger than a first threshold, and if so, the second format is selected; otherwise, the first format is selected; or
it is checked whether the channel condition between the user equipment and the base station satisfies a condition, and if so, the second format is selected; otherwise, the first format is selected; or
it is checked whether the current cell load condition satisfies a condition, and if so, the second format is selected; otherwise, the first format is selected;
determining, by the base station, an identifier corresponding to the selected unit format according to a preset corresponding relationship between unit formats and identifiers; and
transmitting, by the base station, the determined identifier to the user equipment to instruct the user equipment to transmit in the unit format corresponding to the identifier,
wherein after selecting, by the base station, one of the plurality of unit formats and before transmitting, by the base station, the determined identifier, the method further comprises:
   determining, by the base station, parameter information of a unit corresponding to the selected unit format according to a preset second selection condition; and
   transmitting, by the base station, the determined parameter information to the user equipment to instruct the user equipment to transmit according to the unit format corresponding to the identifier and the parameter information.

A communication system according to an embodiment of the invention includes:
a base station configured to select one of a plurality of unit formats according to a preset first selection condition, determine an identifier corresponding to the selected unit format according to a preset corresponding relationship between unit formats and identifiers, and transmit the determined identifier, wherein the plurality of unit formats includes a first format and a second format, LTE user equipment only supports the first format and LTE-A user equipment supports both the first format and the second format, and
in case that the preset first selection condition includes types of unit formats supported by a user equipment,
when the user equipment is an LTE user equipment, the base station selects the first format; and
when the user equipment is an LTE-A user equipment, the base station selects one of the first format and the second format;
in case that the preset first selection condition further includes one or more of a transmission rate required for a bearer established between the user equipment and the base station, a channel condition between the user equipment and the base station and a current cell load condition,
when the user equipment is an LTE user equipment, the base station selects the first format; and
when the user equipment is an LTE-A user equipment,
it is checked whether the transmission rate required for a bearer established between the user equipment and the base station is larger than a first threshold, and if so, the second format is selected; otherwise, the first format is selected; or
it is checked whether the channel condition between the user equipment and the base station satisfies a condition, and if so, the second format is selected; otherwise, the first format is selected; or
it is checked whether the current cell load condition satisfies a condition, and if so, the second format is selected; otherwise, the first format is selected; and
wherein the base station is further configured to, after the base station selects one of the plurality of unit formats and before the base station transmits the determined identifier, determine parameter information of a unit corresponding to the selected unit format according to a preset second selection condition; and transmits the determined parameter information to the user equipment to instruct the user equipment to transmit according to the unit format corresponding to the identifier and the parameter information;
   and
a user equipment configured to transmit according to the unit format corresponding to the received identifier and the parameter information.

A base station according to an embodiment of the invention includes:
a selection module (100) configured to select one of a plurality of unit formats according to a preset first selection condition, wherein the plurality of unit formats includes a first format and a second format, LTE user equipment only supports the first format and LTE-A user equipment supports both the first format and the second format, and
in case that the preset first selection condition includes types of unit formats supported by a user equipment,
when the user equipment is an LTE user equipment, the first format is selected; and
when the user equipment is an LTE-A user equipment, one of the first format and the second format is selected;
in case that the preset first selection condition further includes one or more of a transmission rate required for a bearer established between the user equipment and the base station, a channel condition between the user equipment and the base station and a current cell load condition,
when the user equipment is an LTE user equipment, the first format is selected; and
when the user equipment is an LTE-A user equipment,
it is checked whether the transmission rate required for a bearer established between the user equipment and the base station is larger than a first threshold, and if so, the second format is selected; otherwise, the first format is selected; or
it is checked whether the channel condition between the user equipment and the base station satisfies a condition, and if so, the second format is selected; otherwise, the first format is selected; or
it is checked whether the current cell load condition satisfies a condition, and if so, the second format is selected; otherwise, the first format is selected;
   an identifier determination module (110) configured to determine an identifier corresponding to the selected unit format according to a preset corresponding relationship between unit formats and identifiers
   a parameter information determination module configured to determine parameter information of a unit corresponding to the unit format selected by the selection module (100) according to a preset second selection condition after the selection module (100) selects one of the plurality of unit formats and before the transmission module transmits the determined identifier; and
   a transmission module configured to transmit the determined identifierand the parameter information to a user equipment to instruct the user equipment to transmit according to the unit format corresponding to the identifier and the parameter information.

The base station according to the embodiment of the invention selects one of a plurality of unit formats according to a preset first selection condition; the base station determines an identifier corresponding to the selected unit format according to a preset corresponding relationship between unit formats and identifiers; and the base station transmits the determined identifier to a user equipment to instruct the user equipment to transmit in the unit format corresponding to the identifier. Since the base station can instruct the user equipment to operate in a specific unit format, both a transmitter and a receiver can operate in the same unit format, thereby improving both the success ratio and the efficiency of data transmission, and further improving the resource utilization ratio of the system and the user experience, and alleviating the burden of the system.

### Brief Description of the Drawings

Fig. 1 is a structure of a protocol stack in an LTE system;
Fig. 2 is a schematic diagram of a structure of a communication system according to an embodiment of the invention;
Fig. 3 is a schematic diagram of a structure of a base station according to an embodiment of the invention; and
Fig. 4 is a flow chart of a method for indicating a unit format according to an embodiment of the invention.

### Detailed Description of the Embodiments

A base station according to an embodiment of the invention selects one of a plurality of unit formats according to a preset first selection condition and transmits an identifier corresponding to the selected unit format to a user equipment to instruct the user equipment to transmit in the unit format corresponding to the identifier. Since the base station can instruct the user equipment to operate in a specific unit format, both a transmitter and a receiver can operate in the same unit format, thereby improving both the success ratio and the efficiency of data transmission.

Embodiments of the invention are further described in details hereinafter with reference to the drawings.

As illustrated in Fig. 2, a communication system according to an embodiment of the invention includes a base station 10 and a user equipment 20.

The base station 10 is configured to select one of a plurality of unit formats according to a preset first selection condition, determine an identifier corresponding to the selected unit format according to a preset corresponding relationship between unit formats and identifiers, and transmit the determined identifier.

The user equipment 20 is configured to transmit in the unit format corresponding to the received identifier.

The user equipment 20 determines the unit format corresponding to the received identifier according to a preset corresponding relationship between unit formats and identifiers upon reception of the identifier to know the specific unit format in which a reception operation and a transmission operation are performed on data borne in a unit.

The corresponding relationship between unit formats and identifiers preset in the user equipment 20 is the same as the corresponding relationship between unit formats and identifiers preset at the base station 10.

In a specific implementation, the corresponding relationship between unit formats and identifiers may be stored into the base station 10 and the user equipment 20 respectively, or into another entity for retrieval by the base station 10 and the user equipment 20.

The corresponding relationship between unit formats and identifiers may not be constant but may be set as required.

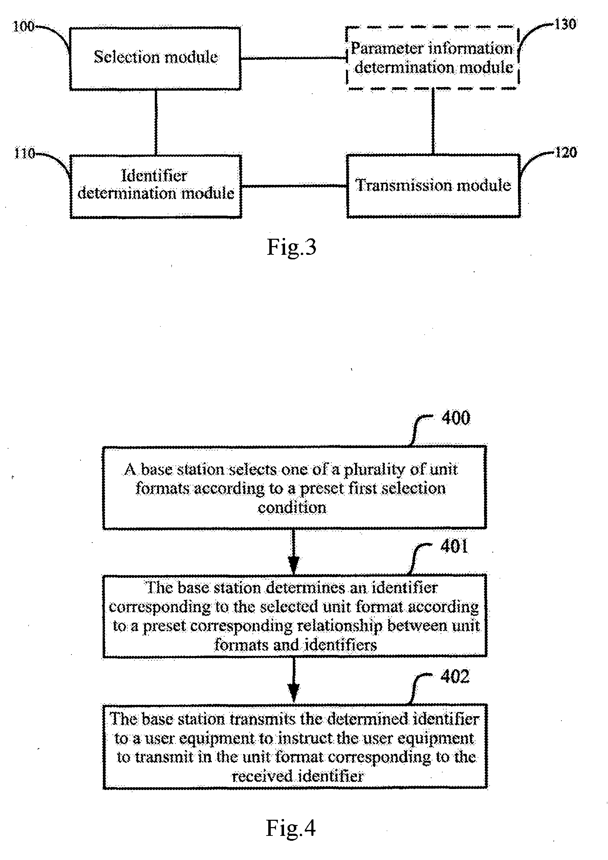

As illustrated in Fig. 3, a base station according to an embodiment of the invention includes a selection module 100, an identifier determination module 110 and a transmission module 120.

The selection module 100 is configured to select one of a plurality of unit formats according to a preset first selection condition.

The first selection condition includes types of unit formats supported by the user equipment and may further include one or more of a transmission rate required for a bearer established between the user equipment and the base station, a channel condition between the user equipment and the base station and a current cell load condition. The following two processing approaches apply respectively to the foregoing two scenarios.

In a first approach, the first selection condition includes types of unit formats supported by the user equipment, and then the selection module 100 selects a unit format supportable by the user equipment among a plurality of unit formats according to the types of unit formats supported by the user equipment.

Types of unit formats supported by the user equipment refer to unit formats supportable by the user equipment, for example, there are two unit formats, one of which is the PDCP PDU format in an LTE system (simply a first format, which represents below the PDCP PDU format in an LTE system), and the other of which is the PDCP PDU format in an LTE-A system (simply a second format, which represents below the PDCP PDU format in an LTE-A system).

Since the LTE-A system can be compatible with the LTE system, both the first format and the second format may be present in the LTE-A system. If the user equipment is an LTE user equipment, it does not support the second format; and if the user equipment is an LTE-A user equipment, it supports both the first format and the second format.

Thus a unit format suitable for the user equipment may be selected according to the types of unit formats supported by the user equipment.

If the user equipment is an LTE-A user equipment, a format may be selected randomly. Preferably, it is determined whether the LTE-A user equipment supports one of Carrier Aggregation (CA) and Coordinated Multi-Point (CoMA), and if so, the second format is selected; otherwise, the first format is selected.

Upon determined that the LTE-A user equipment supports one of Carrier Aggregation and Coordinated Multi-Point, the number of aggregated carriers and/the number of coordinated cells supported by the LTE-A user equipment may further be checked, and if the number of aggregated carriers and/the number of coordinated cells supported by the LTE-A user equipment is larger than a preset number, the second format is selected; otherwise, the first format is selected.

In the second approach, the first selection condition includes types of unit formats supported by the user equipment and also one or more of a transmission rate required for a bearer established between the user equipment and the base station, a channel condition between the user equipment and the base station and a current cell load condition, then the selection module 100 determines all of unit formats supportable by the user equipment among a plurality of unit formats according to the types of unit formats supported by the user equipment and selects one of the determined unit formats supportable by the user equipment according to one or more of the transmission rate required for a bearer established between the user equipment and the base station, the channel condition between the user equipment and the base station and the current cell load condition.

In a specific implementation, if the selection module 100 determines that the user equipment supports only one unit format, it is not necessary to further determine any unit format according to one or more of the transmission rate required for a bearer established between the user equipment and the base station, the channel condition between the user equipment and the base station and the current cell load condition.

The following description is presented still taking the first format and the second format as an example.

A first condition relates to types of unit formats supported by the user equipment.

Particularly, selecting according to types of unit formats supported by the user equipment in the second approach is similar to selecting according to types of unit formats supported by the user equipment in the first approach except for further selecting according to one or more of the following conditions upon determining availability of the two formats for selection.

For example, if it is determined that the LTE-A user equipment supports one of carrier aggregation and coordinated multi-point, the second format is selected; otherwise, the first format is selected.

Furthermore, if the number of aggregated carriers and/or the number of coordinated cells supported by the LTE-A user equipment is larger than a preset number, the second format is selected; otherwise, the first format is selected.

A second condition relates to a transmission rate required for a bearer established between the user equipment and the base station.

Specifically, it is checked whether the transmission rate required for a bearer established between the user equipment and the base station is larger than a first threshold, and if so, the second format is selected; otherwise, the first format is selected.

A third condition relates to a channel condition between the user equipment and the base station.

Specifically, it is checked whether the channel condition between the user equipment and the base station satisfies a condition, for example, if the signal to noise ratio and/or the signal to interference and noise ratio is larger than a second threshold, it is determined that the channel condition between the user equipment and the base station satisfies the condition, then the second format is selected; otherwise, the first format is selected.

A fourth condition relates to a current cell load condition.

Specifically, it is checked whether the current cell load condition satisfies a condition, for example, if a current system load is less than a third threshold, it is determined that the current cell load condition satisfies the condition, then the second format is selected; otherwise, the first format is selected.

In a specific implementation, more than one condition may be used in combination, for example, the second and third conditions are used in combination with the first condition, and judgment is made against firstly the second condition and then the third condition. If it is determined against the second condition that the transmission rate required for a bearer established between the user equipment and the base station is larger than the first threshold, judgment is further made against the third condition; and if it is determined against the second condition that the transmission rate required for a bearer established between the user equipment and the base station is not larger than the first threshold, the first format is selected directly without further judgment against any other condition.

The other combining modes of the conditions may be similar to the above combining mode, and a repeated description thereof is omitted here.

The foregoing description relates to the PDCP PDU format in an LTE system and the PDCP PDU format in an LTE-A system, and the present embodiment is not limited to these two formats but may be applicable to other formats, e.g., the RLC PDU format in an LTE system and the RLC PDU format in an LTE-A system.

It shall be noted that the foregoing description relates to two formats by way of an example, and if there are at least three formats, judgment may be made against a threshold which is a range of values, that is, a range of values corresponds to one or more formats, and the same selection condition is used.

The identifier determination module 110 is configured to determine an identifier corresponding to the unit format selected by the selection module 100 according to a preset corresponding relationship between unit formats and identifiers.

In a specific implementation, the corresponding relationship between unit formats and identifiers may be stored in a database or in a file or in another form.

The transmission module 120 is configured to transmit the identifier determined by the identifier determination module 110 to a user equipment to instruct the user equipment to transmit in the unit format corresponding to the received identifier.

The transmission module 120 may transmit the determined identifier in one of the following ways:
the determined identifier is transmitted in system broadcast;
the determined identifier is transmitted in RRC signalling;
the determined identifier is transmitted in a control data unit; and
the determined identifier is transmitted in a reserved bit, an extension bit or a control field in a data packet.

Correspondingly, the user equipment extracts the identifier from the corresponding information upon reception of the information. Which way is adopted may be informed in a message from the base station to the user equipment or may be preconfigured.

Since it is possible that there are a plurality of kinds of parameter information for a unit corresponding to the determined unit format, it is also necessary for the base station to notify the user equipment of parameter information, and then the base station according to an embodiment of the invention may further include a parameter information determination module 130.

The parameter information determination module 130 is configured to determine parameter information of a unit corresponding to the unit format selected by the selection module 100 according to a preset second selection condition after the selection module 100 selects one of the unit formats and before the transmission module 120 transmits the determined identifier.

Each unit has its own corresponding parameter information, and for the PDCP PDU format in an LTE-A system, for example, the length of an SN is one kind of parameter information and varies in different scenarios.

The second selection condition includes one or more of the following conditions:
a first condition relates to a transmission rate required for a bearer established between the user equipment and the base station;
a second condition relates to a channel condition between the user equipment and the base station; and
a third condition relates to a current cell load condition.

The first, second and third conditions for the second selection condition are similar to the second, third and fourth conditions for the first selection condition respectively except for different settings of the thresholds, and a threshold corresponding to a specific condition may be set as required.

Correspondingly, the transmission module 120 transmits the determined identifier and the parameter information together, or separately in the ways described above, to the user equipment. A specific transmission way is similar to those described above, and a repeated description thereof is omitted here.

The user equipment performs a reception operation and a transmission operation on data borne in the unit according to the unit format corresponding to the identifier and the received parameter information upon reception of the identifier and the parameter information.

As illustrated in Fig. 4, a method for indicating a unit format according to an embodiment of the invention includes the following steps.

In the step 400, a base station selects one of a plurality of unit formats according to a preset first selection condition.

In the step 401, the base station determines an identifier corresponding to the selected unit format according to a preset corresponding relationship between unit formats and identifiers.

In a specific implementation, the corresponding relationship between unit formats and identifiers may be stored in a database or in a file or in another form.

In the step 402, the base station transmits the determined identifier to a user equipment to instruct the user equipment to transmit in the unit format corresponding to the received identifier.

In the step 400, the first selection condition includes types of unit formats supported by the user equipment and may further include one or more of a transmission rate required for a bearer established between the user equipment and the base station, a channel condition between the user equipment and the base station and a current cell load condition. The following two processing approaches apply respectively to the foregoing two scenarios.

In a first approach, the first selection condition includes types of unit formats supported by the user equipment, and then in the step 400, the base station selects a unit format supportable by the user equipment among a plurality of unit formats according to the types of unit formats supported by the user equipment.

Types of unit formats supported by the user equipment refer to unit formats supportable by the user equipment, for example, there are two unit formats, one of which is the PDCP PDU format in an LTE system (simply a first format, which represents below the PDCP PDU format in an LTE system), and the other of which is the PDCP PDU format in an LTE-A system (simply a second format, which represents below the PDCP PDU format in an LTE-A system).

Since the LTE-A system can be compatible with the LTE system, both the first format and the second format may be present in the LTE-A system. If the user equipment is an LTE user equipment, it does not support the second format; and if the user equipment is an LTE-A user equipment, it supports both the first format and the second format.

Thus a unit format suitable for the user equipment may be selected according to the types of unit formats supported by the user equipment.

If the user equipment is an LTE-A user equipment, a format may be selected randomly. Preferably, it is determined whether the LTE-A user equipment supports one of Carrier Aggregation and Coordinated Multi-Point, and if so, the second format is selected; otherwise, the first format is selected.

Upon determined that the LTE-A user equipment supports one of Carrier Aggregation and Coordinated Multi-Point, the number of aggregated carriers and/the number of coordinated cells supported by the LTE-A user equipment may further be checked, and if the number of aggregated carriers and/the number of coordinated cells supported by the LTE-A user equipment is larger than a preset number, the second format is selected; otherwise, the first format is selected.

In the second approach, the first selection condition includes types of unit formats supported by the user equipment and also one or more of a transmission rate required for a bearer established between the user equipment and the base station, a channel condition between the user equipment and the base station and a current cell load condition, then the step 400 may further include the steps a400 and b400.

In the step a400, the base station determines all of unit formats supportable by the user equipment among a plurality of unit formats according to the types of unit formats supported by the user equipment.

In the step b400, the base station selects one of the determined unit formats supportable by the user equipment according to one or more of the transmission rate required for a bearer established between the user equipment and the base station, the channel condition between the user equipment and the base station and the current cell load condition.

In a specific implementation, if the base station determines that the user equipment supports only one unit format in the step a400, it is not necessary to perform the step b400.

The following description is presented still taking the first format and the second format as an example.

A first condition relates to types of unit formats supported by the user equipment.

Particularly, selecting according to types of unit formats supported by the user equipment in the second approach is similar to selecting according to types of unit formats supported by the user equipment in the first approach except for further selecting according to one or more of the following conditions upon determining availability of the two formats for selection.,

For example, if it is determined that the LTE-A user equipment supports one of carrier aggregation and coordinated multi-point, the second format is selected; otherwise, the first format is selected.

Furthermore, if the number of aggregated carriers and/or the number of coordinated cells supported by the LTE-A user equipment is larger than a preset number, the second format is selected; otherwise, the first format is selected.

A second condition relates to a transmission rate required for a bearer established between the user equipment and the base station.

Specifically, it is checked whether the transmission rate required for a bearer established between the user equipment and the base station is larger than a first threshold, and if so, the second format is selected; otherwise, the first format is selected.

A third condition relates to a channel condition between the user equipment and the base station.

Specifically, it is checked whether the channel condition between the user equipment and the base station satisfies a condition, for example, if the signal to noise ratio and/or the signal to interference and noise ratio is larger than a second threshold, it is determined that the channel condition between the user equipment and the base station satisfies the condition, then the second format is selected; otherwise, the first format is selected.

A fourth condition relates to a current cell load condition.

Specifically, it is checked whether the current cell load condition satisfies a condition, for example, if a current system load is less than a third threshold, it is determined that the current cell load condition satisfies the condition, then the second format is selected; otherwise, the first format is selected.

In a specific implementation, more than one condition may be used in combination, for example, the second and third conditions are used in combination with the first condition, and judgment is made against firstly the second condition and then the third condition. If it is determined against the second condition that the transmission rate required for a bearer established between the user equipment and the base station is larger than the first threshold, judgment is further made against the third condition; and if it is determined against the second condition that the transmission rate required for a bearer established between the user equipment and the base station is not larger than the first threshold, the first format is selected directly without further judgment against any other condition.

The other combining modes of the conditions may be similar to the above combining mode, and a repeated description thereof is omitted here.

The foregoing description relates to the PDCP PDU format in an LTE system and the PDCP PDU format in an LTE-A system, and the present embodiment is not limited to these two formats but may be applicable to other formats, e.g., the RLC PDU format in an LTE system and the RLC PDU format in an LTE-A system.

It shall be noted that the foregoing description relates to two formats by way of an example, and if there are at least three formats, judgment may be made against a threshold which is a range of values, that is, a range of values corresponds to one or more formats, and the same selection condition is used.

In the step 402, the base station may transmit the determined identifier in one of the following ways:
the determined identifier is transmitted in system broadcast;
the determined identifier is transmitted in RRC signalling;
the determined identifier is transmitted in a control data unit; and
the determined identifier is transmitted in a reserved bit, an extension bit or a control field in a data packet.

Correspondingly, the user equipment extracts the identifier from the corresponding information upon reception of the information. Which way is adopted may be informed in a message from the base station to the user equipment or may be preconfigured.

The following step 403 may further be included after the step 402.

In the step 403, the user equipment transmits in the unit format corresponding to the received identifier.

In the step 403, the user equipment determines the unit format corresponding to the received identifier according to a preset corresponding relationship between unit formats and identifiers upon reception of the identifier to know the specific unit format in which a reception operation and a transmission operation are performed on data borne in a unit.

The corresponding relationship between unit formats and identifiers preset in the user equipment is the same as the corresponding relationship between unit formats and identifiers preset at the base station.

In a specific implementation, the corresponding relationship between unit formats and identifiers may be stored into the base station and the user equipment respectively, or into another entity for retrieval by the base station and the user equipment.

The corresponding relationship between unit formats and identifiers may not be constant but may be set as required.

Since it is possible that there are a plurality of kinds of parameter information for a unit corresponding to the determined unit format, it is also necessary for the base station to notify the user equipment of parameter information, and then the following step may further be included between the step 400 and the step 402:

the base station determines parameter information of a unit corresponding to the selected unit format according to a preset second selection condition.

Each unit has its own corresponding parameter information, and for the PDCP PDU format in an LTE-A system, for example, the length of an SN is one kind of parameter information and varies in different scenarios.

The second selection condition includes one or more of the following conditions:
a first condition relates to a transmission rate required for a bearer established between the user equipment and the base station;
a second condition relates to a channel condition between the user equipment and the base station; and
a third condition relates to a current cell load condition.

The first, second and third conditions for the second selection condition are similar to the second, third and fourth conditions for the first selection condition respectively except for different settings of the thresholds, and a threshold corresponding to a specific condition may be set as required.

Correspondingly, in the step 402, the base station transmits the determined identifier and the parameter information together, or separately in the ways described above, to the user equipment. A specific transmission way is similar to those described above, and a repeated description thereof is omitted here.

In the step 403, the user equipment performs a reception operation and a transmission operation on data borne in the unit according to the unit format corresponding to the identifier and the received parameter information upon reception of the identifier and the parameter information.

As can be apparent from the foregoing embodiments, the base station according to the embodiment of the invention selects one of a plurality of unit formats according to a preset first selection condition; the base station determines an identifier corresponding to the selected unit format according to a preset corresponding relationship between unit formats and identifiers; and the base station transmits the determined identifier to a user equipment to instruct the user equipment to transmit in the unit format corresponding to the identifier. Since the base station can instruct the user equipment to operate in a specific unit format, both a transmitter and a receiver can operate in the same unit format, thereby improving both the success ratio and the efficiency of data transmission, and further improving the resource utilization ratio of the system and the user experience, and alleviating the burden of the system.

It will be appreciated that one skilled in the art may make various modifications and alterations to the present invention without departing from the scope of the present invention. Accordingly, if these modifications and alterations to the present invention fall within the scope of the claims of the present invention, the present invention intends to include all these modifications and alterations. The invention is defined by the appended claims.

## Claims

1. A method for indicating a unit format, comprising:
selecting, by a base station (10), one of a plurality of unit formats according to a preset first selection condition, wherein the plurality of unit formats includes a first format and a second format for LTE user equipement that only supports the first format and for LTE-A user equipment that supports both the first format and the second format, and
in case that the preset first selection condition includes types of unit formats supported by a user equipment (20),
when the user equipment (20) is an LTE user equipment, the base station (10) selects the first format; and
when the user equipment (20) is an LTE-A user equipment, the base station (10) selects one of the first format and the second format;
in case that the preset first selection condition further includes one or more of a transmission rate required for a bearer established between the user equipment (20) and the base station (10), a channel condition between the user equipment (20) and the base station (10) and a current cell load condition,
when the user equipment (20) is an LTE user equipment, the base station (10) selects the first format; and
when the user equipment (20) is an LTE-A user equipment,
it is checked whether the transmission rate required for the bearer established between the user equipment (20) and the base station (10) is larger than a first threshold, and if so, the second format is selected; otherwise, the first format is selected; or
it is checked whether the channel condition between the user equipment (20) and the base station (10) satisfies a condition, and if so, the second format is selected; otherwise, the first format is selected; or
it is checked whether the current cell load condition satisfies a condition, and if so, the second format is selected; otherwise, the first format is selected;
determining, by the base station (10), an identifier corresponding to the selected unit format according to a preset corresponding relationship between unit formats and identifiers; and
transmitting, by the base station (10), the determined identifier to the user equipment (20) to instruct the user equipment (20) to transmit in the unit format corresponding to the identifier,
wherein after selecting, by the base station (10), one of the plurality of unit formats and before transmitting, by the base station (10), the determined identifier, the method further comprises:
determining, by the base station (10), parameter information of a unit corresponding to the selected unit format according to a preset second selection condition; and
transmitting, by the base station (10), the determined parameter information to the user equipment (20) to instruct the user equipment (20) to transmit according to the unit format corresponding to the identifier and the parameter information.

2. The method of claim 1, wherein transmitting, by the base station (10), the determined identifier is transmitted in one of the following ways:
transmitting the determined identifier in system broadcast;
transmitting the determined identifier in Radio Resource Control, RRC, signalling;
transmitting the determined identifier in a control data unit; and
transmitting the determined identifier in a reserved bit, an extension bit or a control field in a data packet.

3. The method of claim 1, wherein the second selection condition comprises one or more of a transmission rate required for a bearer between the user equipment (20) and the base station (10), a channel condition between the user equipment (20) and the base station (10) and a current cell load condition.

4. The method of claim 1 of 3, wherein transmitting, by the base station (10), the determined parameter informaton is transmitted in one of the following ways:
transmitting the determined parameter information in system broadcast;
transmitting the determined parameter information in RRC signalling;
transmitting the determined parameter information in a control data unit; and
transmitting the determined parameter information in a reserved bit, an extension bit or a control field in a data packet.

5. A communication system comprising:
a base station (10) configured to select one of a plurality of unit formats according to a preset first selection condition, to determine an identifier corresponding to the selected unit format according to a preset corresponding relationship between unit formats and identifiers, and to transmit the determined identifier, wherein the plurality of unit formats includes a first format and a second format for LTE user equipment that only supports the first format and for LTE-A user equipment that supports both the first format and the second format, and
in case that the preset first selection condition includes types of unit formats supported by a user equipment (20),
when the user equipment (20) is an LTE user equipment, the base station (10) is configured to select the first format; and
when the user equipment (20) is an LTE-A user equipment, the base station (10) is configured to select one of the first format and the second format;
in case that the preset first selection condition further includes one or more of a transmission rate required for a bearer established between the user equipment (20) and the base station (10), a channel condition between the user equipment (20) and the base station (10) and a current cell load condition,
when the user equipment (20) is an LTE user equipment, the base station (10) is configured to select the first format; and
when the user equipment (20) is an LTE-A user equipment,
the base station (10) is configured to check whether the transmission rate required for a bearer established between the user equipment (20) and the base station (10) is larger than a first threshold, and if so, the base station (10) is configured to select the second format; otherwise, to select the first format; or
the base station (10) is configured to check whether the channel condition between the user equipment (20) and the base station (10) satisfies a condition, and if so, the base station (10) is configured to select the second format; otherwise, to select the first format; or
the base station (10) is configured to check whether the current cell load condition satisfies a condition, and if so, the base station (10) is configured to select the second format; otherwise, to select the first format is selected; and
wherein the base station (10) is further configured to, after the base station (10) selects one of the plurality of unit formats and before the base station (10) transmits the determined identifier, to determine parameter information of a unit corresponding to the selected unit format according to a preset second selection condition; and to transmit the determined parameter information to the user equipment (20) to instruct the user equipment (20) to transmit according to the unit format corresponding to the identifier and the parameter information
and
a user equipment (20) configured to transmit according to the unit format corresponding to the received identifier and the parameter information.

6. A base station (10), comprising:
a selection module (100) configured to select one of a plurality of unit formats according to a preset first selection condition, wherein the plurality of unit formats includes a first format and a
second format for LTE user equipment that only supports the first format and for LTE-A user equipment that supports both the first format and the second format, and
in case that the preset first selection condition includes types of unit formats supported by a user equipment (20),
when the user equipment (20) is an LTE user equipment, to select the first format; and when the user equipment (20) is an LTE-A user equipment, to select one of the first format and the second format;
in case that the preset first selection condition further includes one or more of a transmission rate required for a bearer established between the user equipment (20) and the base station (10), a channel condition between the user equipment (20) and the base station (10) and a current cell load condition,
when the user equipment (20) is an LTE user equipment, to select the first format; and
when the user equipment (20) is an LTE-A user equipment,
to check whether the transmission rate required for a bearer established between the user equipment (20) and the base station (10) is larger than a first threshold, and if so, to select the second format; otherwise, to select the first format; or
to check whether the channel condition between the user equipment (20) and the base station (10) satisfies a condition, and if so, to select the second format; otherwise, to select the first format; or
to check whether the current cell load condition satisfies a condition, and if so, to select the second format; otherwise, to select the first format;
an identifier determination module (110) configured to determine an identifier corresponding to the selected unit format according to a preset corresponding relationship between unit formats and identifiers;
a parameter information determination module (130) configured to determine parameter information of a unit corresponding to the unit format selected by the selection module (100) according to a preset second selection condition after the selection module (100) selects one of the plurality of unit formats and before the transmission module (120) transmits the determined identifier; and
a transmission module (120) configured to transmit the determined identifier and the parameter information to a user equipment (20) to instruct the user equipment (20) to transmit according to the unit format corresponding to the identifier and the parameter information

7. The base station (10) of claim 6, wherein the transmission module (120) is configured to transmit the determined identifier in one of the following ways:
the determined identifier is transmitted in system broadcast;
the determined identifier is transmitted in Radio Resource Control, RRC, signalling;
the determined identifier is transmitted in a control data unit; and
the determined identifier is transmitted in a reserved bit, an extension bit or a control field in a data packet.

8. The base station (10) of claim 6, wherein the second selection condition comprises one or more of a transmission rate required for a bearer between the user equipment (20) and the base station (10), a channel condition between the user equipment (20) and the base station (10) and a current cell load condition.

9. The base station (10) of claim 6 or 8, wherein the transmission module (120) is configured to transmit the determined parameter information in one of the following ways:
the determined parameter information is transmitted in system broadcast;
the determined parameter information is transmitted in RRC signalling;
the determined parameter information is transmitted in a control data unit; and
the determined parameter information is transmitted in a reserved bit, an extension bit or a control field in a data packet.

## Patentansprüche

1. Verfahren zum Anzeigen eines Einheitformats, in dem:
durch eine Basisstation (10) eines von mehreren Einheitformaten gemäß einer voreingestellten ersten Auswahlbedingung ausgewählt wird, wobei die mehreren Einheitformate ein erstes Format und ein zweites Format für ein LTE-Endgerät, das nur das erste Format unterstützt, und für ein LTE-A-Endgerät, das sowohl das erste Format als auch das zweite Format unterstützt, umfassen, und
für den Fall, dass die voreingestellte erste Auswahlbedingung Typen von Einheitformaten enthält, die von einem Endgerät (20) unterstützt werden,
wenn das Endgerät (20) ein LTE-Endgerät ist, die Basisstation (10) das erste Format auswählt; und
wenn das Endgerät (20) ein LTE-A-Endgerät ist, die Basisstation (10) das erste Format oder das zweite Format auswählt;
für den Fall, dass die voreingestellte erste Auswahlbedingung ferner eine Übertragungsrate, die für einen zwischen dem Endgerät (20) und der Basisstation (10) eingerichteten Träger benötigt wird, einen Kanalzustand zwischen dem Endgerät (20) und der Basisstation und/oder einen aktuellen Zelllastzustand enthält,
wenn das Endgerät (20) ein LTE-Endgerät ist, die Basisstation (10) das erste Format auswählt; und
wenn das Endgerät (20) ein LTE-A-Endgerät ist,
es überprüft wird, ob die für den zwischen dem Endgerät (20) und der Basisstation (10) eingerichteten Träger benötigte Übertragungsrate größer als ein erster Schwellenwert ist, und, falls dem so ist, das zweite Format ausgewählt wird; anderenfalls, das erste Format ausgewählt wird; oder
es überprüft wird, ob der Kanalzustand zwischen dem Endgerät (20) und der Basisstation (10) eine Bedingung erfüllt, und, falls dem so ist, das zweite Format ausgewählt wird; anderenfalls, das erste Format ausgewählt wird; oder
es überprüft wird, ob der aktuelle Zelllastzustand eine Bedingung erfüllt, und, falls dem so ist, das zweite Format ausgewählt wird; anderenfalls, das erste Format ausgewählt wird;
durch die Basisstation (10) eine Kennung, die dem ausgewählten Einheitformat entspricht, nach einer voreingestellten entsprechenden Beziehung zwischen Einheitformaten und Kennungen festgelegt wird; und
durch die Basisstation (10) die festgelegte Kennung dem Endgerät (20) übertragen wird, um das Endgerät (20) anzuweisen in dem der Kennung entsprechenden Einheitformat zu übertragen,
wobei nachdem die Basisstation eines der mehreren Einheitformate auswählt und bevor die Basisstation (10) die festgelegte Kennung überträgt, in dem Verfahren ferner:
durch die Basisstation (10) Parameterinformationen einer Einheit, die dem ausgewählten Einheitformat entsprechen, gemäß einer voreingestellten zweiten Auswahlbedingung festgelegt werden; und
durch die Basisstation (10) die festgelegten Parameterinformationen an das Endgerät (20) übertragen werden, um das Endgerät (20) anzuweisen gemäß dem der Kennung und den Parameterinformationen entsprechenden Einheitformat zu übertragen.

2. Verfahren nach Anspruch 1, wobei beim Übertragen durch die Basisstation (10), die festgelegte Kennung nach einer der nachfolgenden Möglichkeiten übertragen wird:
Übertragen der festgelegten Kennung in einem System-Broadcast;
Übertragen der festgelegten Kennung in einer Radio-Resource-Control, RRC,-Signalisierung;
Übertragen der festgelegten Kennung in einer Steuerdateneinheit; und
Übertragen der festgelegten Kennung in einem reservierten Bit, einem Erweiterungsbit oder einem Steuerfeld in einem Datenpaket.

3. Verfahren nach Anspruch 1, wobei die zweite Auswahlbedingung eine Übertragungsrate, die für einen Träger zwischen dem Endgerät (20) und der Basisstation (10) notwendig ist, einen Kanalzustand zwischen dem Endgerät (20) und der Basisstation (10) und/oder einen aktuellen Zelllastzustand umfasst.

4. Verfahren nach Anspruch 1 oder 3, wobei die festgelegten Parameterinformationen beim Übertragen durch die Basisstation (10) nach einer der nachfolgenden Möglichkeiten übertragen werden:
Übertragen der festgelegten Parameterinformationen in einem System-Broadcast;
Übertragen der festgelegten Parameterinformationen in einer RRC-Signalisierung;
Übertragen der festgelegten Parameterinformationen in einer Steuerdateneinheit; und
Übertragen der festgelegten Parameterinformationen in einem reservierten Bit, einem Erweiterungsbit oder einem Steuerfeld in einem Datenpaket.

5. Kommunikationssystem, umfassend:
eine Basisstation (10), die dazu ausgelegt ist, eines von mehreren Einheitformaten gemäß einer voreingestellten ersten Auswahlbedingung auszuwählen, um eine dem ausgewählten Einheitformat entsprechende Kennung gemäß einer voreingestellten entsprechenden Beziehung zwischen Einheitformaten und Kennungen festzulegen, und um die festgelegte Kennung zu übertragen, wobei die mehreren Einheitformate ein erstes Einheitformat und ein zweites Einheitformat für LTE-Endgeräte, die nur das erste Einheitformat unterstützen, und für LTE-A-Endgeräte, die sowohl das erste Format als auch das zweite Format unterstützen, enthalten, und
für den Fall, dass die voreingestellte Auswahlbedingung Typen von Einheitformaten enthält, die durch ein Endgerät (20) unterstützt werden,
wenn das Endgerät (20) ein LTE-Endgerät ist, die Basisstation (10) dazu ausgelegt ist, das erste Format auszuwählen; und
wenn das Endgerät (20) ein LTE-A-Endgerät ist, die Basisstation (10) dazu ausgelegt ist, das erste Format oder das zweite Format auszuwählen;
für den Fall, dass die voreingestellte erste Auswahlbedingung ferner eine Übertragungsrate, die für einen zwischen dem Endgerät (20) und der Basisstation (10) eingerichteten Träger notwendig ist, einen Kanalzustand zwischen dem Endgerät (20) und der Basisstation (10) und/oder einen aktuellen Zelllastzustand enthält,
wenn das Endgerät (20) ein LTE-Endgerät ist, die Basisstation (10) dazu ausgelegt ist, das erste Format auszuwählen; und
wenn das Endgerät (20) ein LTE-A-Endgerät ist,
die Basisstation (10) dazu ausgelegt ist, zu überprüfen, ob die Übertragungsrate, die für einen zwischen dem Endgerät (20) und der Basisstation (10) eingerichteten Träger notwendig ist, größer als ein erster Schwellenwert ist, und, falls dem so ist, die Basisstation (10) dazu ausgelegt ist, das zweite Format auszuwählen; anderenfalls, das erste Format auszuwählen; oder
die Basisstation (10) dazu ausgelegt ist, zu überprüfen, ob der Kanalzustand zwischen dem Endgerät (20) und der Basisstation (10) eine Bedingung erfüllt, und, falls dem so ist, die Basisstation (10) dazu ausgelegt ist, das zweite Format auszuwählen; anderenfalls, das erste Format auszuwählen; oder
die Basisstation (10) dazu ausgelegt ist, zu überprüfen, ob der aktuelle Zelllastzustand eine Bedingung erfüllt, und, falls dem so ist, die Basisstation (10) dazu ausgelegt ist, das zweite Format auszuwählen; anderenfalls, das erste Format auszuwählen; und
wobei die Basisstation (10) ferner dazu ausgelegt ist, nachdem die Basisstation (10) eines der mehreren Einheitformate auswählt und bevor die Basisstation (10) die festgelegte Kennung überträgt, Parameterinformationen einer Einheit, die dem ausgewählten Einheitformat entspricht, gemäß einer voreingestellten zweiten Auswahlbedingung festzulegen; und die festgelegten Parameterinformationen dem Endgerät (20) zu übertragen, um das Endgerät (20) anzuweisen gemäß dem der Kennung und den Parameterinformationen entsprechenden Einheitformat zu übertragen; und
ein Endgerät (20), das dazu ausgelegt ist, gemäß dem Einheitformat, das der empfangenen Kennung und den Parameterinformationen entspricht, zu übertragen.

6. Basisstation (10), umfassend:
ein Auswahlmodul (100), das dazu ausgelegt ist, eines von mehreren Einheitformaten gemäß einer voreingestellten ersten Auswahlbedingung auszuwählen, wobei die mehreren Einheitformate ein erstes Format und ein zweites Format für ein LTE-Endgerät, das nur das erste Format unterstützt, und für ein LTE-A-Endgerät, das sowohl das erste Format als auch das zweite Format unterstützt, enthalten, und
für den Fall, dass die voreingestellte erste Auswahlbedingung Typen von Einheitformaten enthält, die durch ein Endgerät (20) unterstützt werden,
wenn das Endgerät (20) ein LTE-Endgerät ist, das erste Format auszuwählen; und
wenn das Endgerät (20) ein LTE-A-Endgerät ist, das erste Format oder das zweite Format auszuwählen;
für den Fall, dass die voreingestellte erste Auswahlbedingung ferner eine Übertragungsrate, die für einen zwischen dem Endgerät (20) und der Basisstation (10) eingerichteten Träger notwendig ist, einen Kanalzustand zwischen dem Endgerät (20) und der Basisstation (10) und/oder eine aktuelle Zelllastbedingung enthält,
wenn das Endgerät (20) ein LTE-Endgerät ist, das erste Format auszuwählen; und
wenn das Endgerät (20) ein LTE-A-Endgerät ist,
zu überprüfen, ob die Übertragungsrate, die für einen zwischen einem Endgerät (20) und der Basisstation (10) eingerichteten Träger notwendig ist, größer als ein erster Schwellenwert ist, und, falls dem so ist, das zweite Format auszuwählen; anderenfalls, das erste Format auszuwählen; oder
zu überprüfen, ob der Kanalzustand zwischen dem Endgerät (20) und der Basisstation (10) eine Bedingung erfüllt, und, falls dem so ist, das zweite Format auszuwählen; anderenfalls, das erste Format auszuwählen; oder
zu überprüfen, ob der aktuelle Zelllastzustand eine Bedingung erfüllt, und falls dem so ist, das zweite Format auszuwählen; anderenfalls, das erste Format auszuwählen;
ein Kennungsfestlegemodul (110), das dazu ausgelegt ist, eine Kennung, die dem ausgewählten Einheitformat entspricht, gemäß einer voreingestellten entsprechenden Beziehung zwischen Einheitformaten und Kennungen festzulegen;
ein Parameterinformationsfestlegemodul (130), das dazu ausgelegt ist, Parameterinformationen einer Einheit, die dem durch das Auswahlmodul (100) ausgewählten Einheitformat entspricht, gemäß einer voreingestellten zweiten Auswahlbedingung festzulegen, nachdem das Auswahlmodul (100) eines von mehreren Einheitformaten auswählt und bevor das Übertragungsmodul (120) die festgelegte Kennung überträgt; und
ein Übertragungsmodul (120), das dazu ausgelegt ist, die festgelegte Kennung und die Parameterinformationen einem Endgerät (20) zu übertragen, um das Endgerät (20) anzuweisen gemäß dem der Kennung und den Parameterinformationen entsprechenden Einheitformat zu übertragen.

7. Basisstation (10) nach Anspruch 6, wobei das Übertragungsmodul (120) dazu ausgelegt ist, die festgelegte Kennung nach einer der folgenden Möglichkeiten zu übertragen:
die festgelegte Kennung wird in einem System-Broadcast übertragen;
die festgelegte Kennung wird in einer Radio-Resource-Control, RRC,-Signalisierung übertragen;
die festgelegte Kennung wird in einer Steuerdateneinheit übertragen; und
die festgelegte Kennung wird in einem reservierten Bit, einem Erweiterungsbit oder einem Steuerfeld in einem Daten-paket übertragen.

8. Basisstation (10) nach Anspruch 6, wobei die zweite Auswahlbedingung eine Übertragungsrate, die für einen zwischen dem Endgerät (20) und der Basisstation (10) eingerichteten Träger notwendig ist, einen Kanalzustand zwischen dem Endgerät (20) und der Basisstation (10) und/oder einen aktuellen Zelllastzustand enthält.

9. Basisstation (10) nach Anspruch 6 oder 8, wobei das Übertragungsmodul (120) dazu ausgelegt ist, die festgelegten Parameterinformationen nach einer der nachfolgenden Möglichkeiten zu übertragen:
die festgelegten Parameterinformationen werden in einem System-Broadcast übertragen;
die festgelegten Parameterinformationen werden in einer RRC-Signalisierung übertragen;
die festgelegten Parameterinformationen werden in einer Steuerdateneinheit übertragen; und
die festgelegten Parameterinformationen werden in einem reservierten Bit, einem Erweiterungsbit oder einem Steuerungsfeld in einem Datenpaket übertragen.

## Revendications

1. Procédé d'indication d'un format d'unité, consistant à :
sélectionner, par le biais d'une station de base (10), l'un d'une pluralité de formats d'unité selon une première condition de sélection prédéfinie, dans lequel la pluralité de formats d'unité inclut un premier format et un second format pour un équipement utilisateur LTE qui ne prend en charge que le premier format, et pour un équipement utilisateur LTE-A qui prend en charge à la fois le premier format et le second format ; et
dans le cas où la première condition de sélection prédéfinie inclut des types de formats d'unité pris en charge par un équipement utilisateur (20) :
lorsque l'équipement utilisateur (20) est un équipement utilisateur LTE, la station de base (10) sélectionne le premier format ; et
lorsque l'équipement utilisateur (20) est un équipement utilisateur LTE-A, la station de base (10) sélectionne l'un parmi le premier format et le second format ;
dans le cas où la première condition de sélection prédéfinie inclut en outre une ou plusieurs caractéristiques parmi un débit de transmission requis pour une porteuse établie entre l'équipement utilisateur (20) et la station de base (10), un état de canal entre l'équipement utilisateur (20) et la station de base (10) et un état de charge de cellule en cours :
lorsque l'équipement utilisateur (20) est un équipement utilisateur LTE, la station de base (10) sélectionne le premier format ; et
lorsque l'équipement utilisateur (20) est un équipement utilisateur LTE-A,
il est vérifié si le débit de transmission requis pour la porteuse établie entre l'équipement utilisateur (20) et la station de base (10) est supérieur à un premier seuil, et, le cas échéant, le second format est sélectionné ; sinon, le premier format est sélectionné ; ou
il est vérifié si l'état de canal entre l'équipement utilisateur (20) et la station de base (10) satisfait une condition, et le cas échéant, le second format est sélectionné ; sinon, le premier format est sélectionné ; ou
il est vérifié si l'état de charge de cellule en cours satisfait une condition, et le cas échéant, le second format est sélectionné ; sinon, le premier format est sélectionné ;
déterminer, par le biais de la station de base (10) , un identifiant correspondant au format d'unité sélectionné selon une relation correspondante prédéfinie entre des formats d'unité et des identifiants ; et
transmettre, par le biais de la station de base (10), l'identifiant déterminé, à l'équipement utilisateur (20), en vue d'ordonner à l'équipement utilisateur (20) d'émettre dans le format d'unité correspondant à l'identifiant ;
dans lequel, postérieurement à la sélection, par le biais de la station de base (10), de l'un de la pluralité de formats d'unité, et préalablement à la transmission, par le biais de la station de base (10), de l'identifiant déterminé, le procédé consiste en outre à :
déterminer, par le biais de la station de base (10), des informations de paramètres d'une unité correspondant au format d'unité sélectionné selon une seconde condition de sélection prédéfinie ; et
transmettre, par le biais de la station de base (10), les informations de paramètres déterminées, à l'équipement utilisateur (20), en vue d'ordonner à l'équipement utilisateur (20) d'émettre selon le format d'unité correspondant à l'identifiant et aux informations de paramètres.

2. Procédé selon la revendication 1, dans lequel la transmission, par le biais de la station de base (10), de l'identifiant déterminé, est mise en oeuvre de l'une des manières ci-dessous consistant à :
transmettre l'identifiant déterminé dans une diffusion de système ;
transmettre l'identifiant déterminé dans une signalisation de commande de ressources radio, RRC ;
transmettre l'identifiant déterminé dans une unité de données de commande ; et
transmettre l'identifiant déterminé dans un bit réservé, dans un bit d'extension ou dans un champ de commande dans un paquet de données.

3. Procédé selon la revendication 1, dans lequel la seconde condition de sélection comprend une ou plusieurs caractéristiques parmi un débit de transmission requis pour une porteuse entre l'équipement utilisateur (20) et la station de base (10), un état de canal entre l'équipement utilisateur (20) et la station de base (10) et un état de charge de cellule en cours.

4. Procédé selon la revendication 1 ou 3, dans lequel la transmission, par le biais de la station de base (10), des informations de paramètres déterminées, est mise en oeuvre de l'une des manières ci-dessous consistant à :
transmettre les informations de paramètres déterminées dans une diffusion de système ;
transmettre les informations de paramètres déterminées dans une signalisation de commande RRC ;
transmettre les informations de paramètres déterminées dans une unité de données de commande ; et
transmettre les informations de paramètres déterminées dans un bit réservé, dans un bit d'extension ou dans un champ de commande dans un paquet de données.

5. Système de communication comprenant :
une station de base (10) configurée de manière à sélectionner l'un d'une pluralité de formats d'unité selon une première condition de sélection prédéfinie, à déterminer un identifiant correspondant au format d'unité sélectionné selon une relation correspondante prédéfinie entre des formats d'unité et des identifiants, et à transmettre l'identifiant déterminé, dans lequel la pluralité de formats d'unité inclut un premier format et un second format pour un équipement utilisateur LTE qui ne prend en charge que le premier format et pour un équipement utilisateur LTE-A qui prend en charge à la fois le premier format et le second format ; et
dans le cas où la première condition de sélection prédéfinie inclut des types de formats d'unité pris en charge par un équipement utilisateur (20),
lorsque l'équipement utilisateur (20) est un équipement utilisateur LTE, la station de base (10) est configurée de manière à sélectionner le premier format ; et
lorsque l'équipement utilisateur (20) est un équipement utilisateur LTE-A, la station de base (10) est configurée de manière à sélectionner l'un parmi le premier format et le second format ;
dans le cas où la première condition de sélection prédéfinie inclut en outre une ou plusieurs caractéristiques parmi un débit de transmission requis pour une porteuse établie entre l'équipement utilisateur (20) et la station de base (10), un état de canal entre l'équipement utilisateur (20) et la station de base (10), et un état de charge de cellule en cours ,
lorsque l'équipement utilisateur (20) est un équipement utilisateur LTE, la station de base (10) est configurée de manière à sélectionner le premier format ; et
lorsque l'équipement utilisateur (20) est un équipement utilisateur LTE-A,
la station de base (10) est configurée de manière à vérifier si le débit de transmission requis pour une porteuse établie entre l'équipement utilisateur (20) et la station de base (10) est supérieur à un premier seuil, et le cas échéant, la station de base (10) est configurée de manière à sélectionner le second format ; et sinon, de manière à sélectionner le premier format ; ou
la station de base (10) est configurée de manière à vérifier si l'état de canal entre l'équipement utilisateur (20) et la station de basse (10) satisfait une condition, et le cas échéant, la station de base (10) est configurée de manière à sélectionner le second format ; et sinon, de manière à sélectionner le premier format ; ou
la station de base (10) est configurée de manière à vérifier si l'état de charge de cellule en cours satisfait une condition, et le cas échéant, la station de base (10) est configurée de manière à sélectionner le second format ; et sinon, la station de base est configurée de manière à sélectionner le premier format ; et
dans lequel la station de base (10) est en outre configurée de manière à, après que la station de base (10) a sélectionné l'un de la pluralité de formats d'unité, et avant que la station de base (10) ne transmette l'identifiant déterminé, déterminer des informations de paramètres d'une unité correspondant au format d'unité sélectionné selon une seconde condition de sélection prédéfinie ; et à transmettre les informations de paramètres déterminées à l'équipement utilisateur (20), en vue d'ordonner à l'équipement utilisateur (20) d'émettre selon le format d'unité correspondant à l'identifiant et aux informations de paramètres ; et
un équipement utilisateur (20) configuré de manière à émettre selon le format d'unité correspondant à l'identifiant reçu et aux informations de paramètres.

6. Station de base (10), comprenant :
un module de sélection (100) configuré de manière à sélectionner l'un d'une pluralité de formats d'unité selon une première condition de sélection prédéfinie, dans laquelle la pluralité de formats d'unité inclut un premier format, et un second format pour un équipement utilisateur LTE qui ne prend en charge que le premier format et pour un équipement utilisateur LTE-A qui prend en charge à la fois le premier format et le second format ; et
dans le cas où la première condition de sélection prédéfinie inclut des types de formats d'unité pris en charge par un équipement utilisateur (20) :
lorsque l'équipement utilisateur (20) est un équipement utilisateur LTE, à sélectionner le premier format ; et
lorsque l'équipement utilisateur (20) est un équipement utilisateur LTE-A, à sélectionner l'un parmi le premier format et le second format ;
dans le cas où la première condition de sélection prédéfinie inclut en outre une ou plusieurs caractéristiques parmi un débit de transmission requis pour une porteuse établie entre l'équipement utilisateur (20) et la station de base (10), un état de canal entre l'équipement utilisateur (20) et la station de base (10), et un état de charge de cellule en cours ,
lorsque l'équipement utilisateur (20) est un équipement utilisateur LTE, à sélectionner le premier format ; et
lorsque l'équipement utilisateur (20) est un équipement utilisateur LTE-A :
à vérifier si le débit de transmission requis pour une porteuse établie entre l'équipement utilisateur (20) et la station de base (10) est supérieur à un premier seuil, et le cas échéant, à sélectionner le second format ; sinon, à sélectionner le premier format ; ou
à vérifier si l'état de canal entre l'équipement utilisateur (20) et la station de base (10) satisfait une condition, et le cas échéant, à sélectionner le second format ; sinon, à sélectionner le premier format ; ou
à vérifier si l'état de charge de cellule en cours satisfait une condition, et le cas échéant, à sélectionner le second format ; sinon, à sélectionner le premier format ;
un module de détermination d'identifiant (110) configuré de manière à déterminer un identifiant correspondant au format d'unité sélectionné selon une relation correspondante prédéfinie entre des formats d'unité et des identifiants ;
un module de détermination d'informations de paramètres (130) configuré de manière à déterminer des informations de paramètres d'une unité correspondant au format d'unité sélectionné par le module de sélection (100) selon une seconde condition de sélection prédéfinie, après que le module de sélection (100) a sélectionné l'un de la pluralité de formats d'unité, et avant que le module de transmission (120) ne transmette l'identifiant déterminé ; et
un module de transmission (120) configuré de manière à transmettre l'identifiant déterminé et les informations de paramètres à un équipement utilisateur (20), en vue d'ordonner à l'équipement utilisateur (20) d'émettre selon le format d'unité correspondant à l'identifiant et aux informations de paramètres.

7. Station de base (10) selon la revendication 6, dans laquelle le module de transmission (120) est configuré de manière à transmettre l'identifiant déterminé de l'une des manières ci-dessous dans lesquelles :
l'identifiant déterminé est transmis dans une diffusion de système ;
l'identifiant déterminé est transmis dans une signalisation de commande de ressources radio, RRC ;
l'identifiant déterminé est transmis dans une unité de données de commande ; et
l'identifiant déterminé est transmis dans un bit réservé, dans un bit d'extension ou dans un champ de commande dans un paquet de données.

8. Station de base (10) selon la revendication 6, dans laquelle la seconde condition de sélection comprend une ou plusieurs caractéristiques parmi un débit de transmission requis pour une porteuse entre l'équipement utilisateur (20) et la station de base (10), un état de canal entre l'équipement utilisateur (20) et la station de base (10), et un état de charge de cellule en cours.

9. Station de base (10) selon la revendication 6 ou 8. dans laquelle le module de transmission (120) est configuré de manière à transmettre les informations de paramètres déterminées de l'une des manières ci-dessous dans lesquelles :
les informations de paramètres déterminées sont transmises dans une diffusion de système ;
les informations de paramètres déterminées sont transmises dans une signalisation de commande RRC ;
les informations de paramètres déterminées sont transmises dans une unité de données de commande ; et
les informations de paramètres déterminées sont transmises dans un bit réservé, dans un bit d'extension ou dans un champ de commande dans un paquet de données.
